# DEMANDE DE BREVET EUROPEEN

(11) **EP 1 504 640 A1**
(43) Date de publication de la demande: **09.02.2005**
(21) Numéro de dépôt: 04364049.9
(22) Date de dépôt: 08.07.2004
(51) Int. Cl.: A01B 71/08

(54) **Collier d'amarage anti-rotation**

(30) Priorité: 11.07.2003 FR 0308563
(71) Demandeur: Gourdin, Maurice, 35120 Baguer Pican (FR)
(72) Inventeur: Gourdin, Maurice, 35120 Baguer Pican (FR)

(57) **Abrégé**

Dispositif pour fiabiliser les protections de cardan mis en place pour protéger contre les accidents du travail les utilisateurs d'outils animés par prise de force.

L'invention concerne un dispositif pour amarrer et maintenir fixes les protections de cardan empêchant la rotation à vive allure de cette dernière constaté lors d'accidents encourus lors de la rupture des amarres de la protection de cardan.

Le dispositif est constitué d'un collier (C) présentant dans sa face intérieure des tiges saillantes (6) qui viennent se loger dans les réservations (7) du tube de la protection de cardan (P). Lors du serrage du collier (C) autour de la protection de cardan (P), serrage permis grâce aux pattes d'assemblage (1) serrées avec boutons et écrous freins indévissables (2). Le collier (C) étant muni d'un anneau d'ancrage (3) où vient se fixer une chaînette d'amarrage (4) liée par un maillon raccord vissable (5) pour ainsi amarrer le collier (C₁) au châssis de l'outil travaillant (9) et de même amarrer le collier (C₂) au châssis du tracteur (8).

Le dispositif selon l'invention est particulièrement destiné à la sécurité des outils animés par prise de force utilisés dans le machinisme agricole et forestier.

## Description

La présente invention concerne un dispositif pour fiabiliser les protections de cardans dont sont équipés les outils animés par prise de force dans le machinisme agricole et forestier.

Les protections de cardans sont habituellement maintenues fixes, par une chaînette à chaque extrémité, l'une attachée au châssis du tracteur, l'autre attachée au châssis de l'outil travaillant. Le bout de la chaînette relié à la protection du cardan étant fixé à une bague moulée dans la masse plastique de la protection de cardan.

Dans la pratique, au fil de l'utilisation de l'outil, la bague plastique finit par casser et la protection du cardan se met à tourner à vive allure avec le cardan ; la protection du cardan ne joue plus son rôle et, malheureusement, on dénombre chaque année des accidents graves, parfois mortels, des utilisateurs happés par la prise de force qui n'est plus protégée.

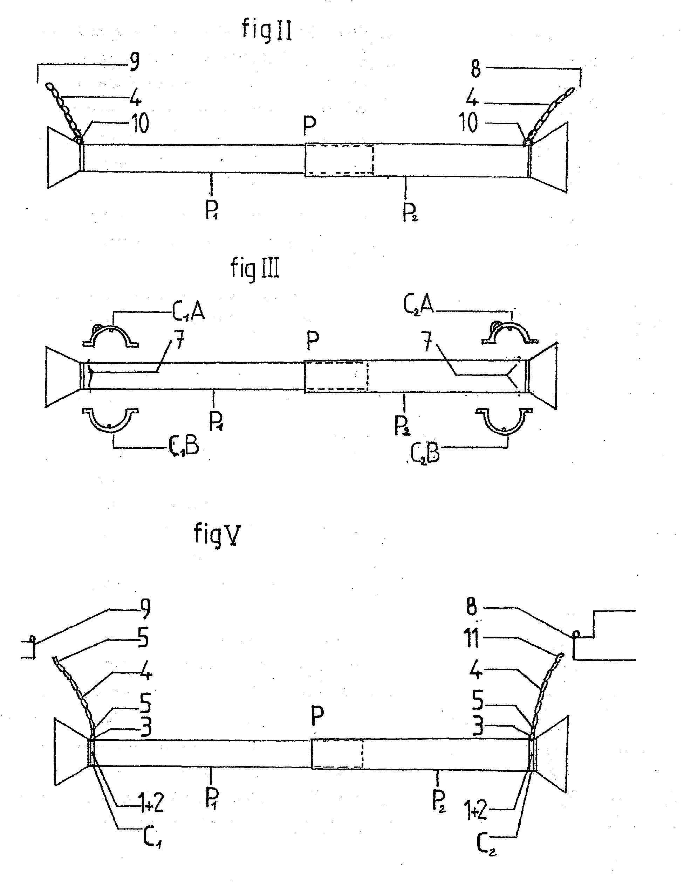

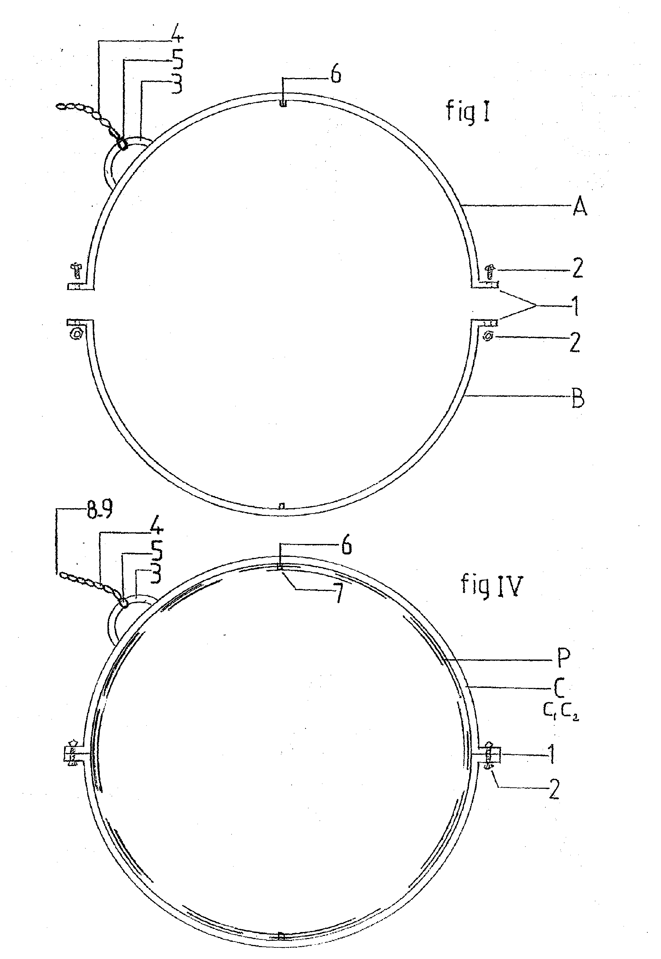

Le dispositif selon l'invention permet de remédier à ce problème ; des dessins annexés illustrent l'invention.
La figure (I) présente le collier en question, une coupe de face permet de visualiser et d'énumérer les différentes parties majeures pour l'application du système.
La figure (II) présente l'état technique antérieur de la protection de cardan (P).
Les figures (III) et (IV) schématisent le mode d'application de la solution technique.
La figure (V) permet de comprendre la solution finale apportée au problème en question.

Il s'agit en effet d'un collier métallique rigide composé de deux parties rigides identiques en forme de demi-cercle (A) et (B), chaque extrémité des deux demi-cercles sont repliées vers l'extérieur sur vingt millimètres à quatre vingt dix degrés, ceci étant les pattes d'assemblage (1) de ces deux parties. Ces pattes d'assemblage seront percées et seront assemblées par des boulons avec des écrous freins indévissables (2) ; ainsi, les deux parties en forme de demi-cercle, assemblées, forment le collier (C). Sur une des deux moitiés du collier (A), côté extérieur, est soudé un anneau métallique (3) de vingt millimètres de diamètre et de quatre à cinq millimètres d'épaisseur. A cet anneau se fixera la chaînette d'ancrage (4) qui auparavant était fixée à la bague plastique (10) de la protection de cardan.

La particularité qui fait l'efficacité du système de ce collier est la suivante.

Sur la face interne des deux parties en forme de demi-cercle qui forment ce collier, nous avons percé puis introduit une tige métallique (6) d'environ six millimètres de long pour trois millimètres de diamètre, selon le gabarit du collier. Cette tige (6) est soudée face extérieure du collier et est saillante face intérieure du collier d'environ deux millimètres correspondant à l'épaisseur du tube de la protection de cardan (P).

Pour fixer le collier (C) sur la protection de cardan (P), il faut percer des réservations (7) du diamètre des tiges saillantes (6) présentes à l'intérieur du collier. Les réservations (7) étant percées symétriquement une dessus et l'autre dessous le tube de la protection du cardan (P). Ainsi, le tube femelle (P₂) de la protection de cardan (P) sera serré par le collier (C₂) retenu par la chaînette (4) raccordée par un maillon vissé (5) dans une extrémité à l'anneau d'ancrage (3) du collier (C₂), l'autre extrémité de la chaînette étant attachée au châssis du tracteur (8) par un maillon mousqueton (11) ceci étant pour le tube femelle (P₂) de la protection de cardan (P). De même sur le tube mâle (P₁) de la protection de cardan (P) un second collier (C₁) est mis en place, la chaînette (4) est reliée à l'anneau d'ancrage (3) de ce collier (C₁) par un maillon raccord vissé (5) et l'autre extrémité de la chaînette est fixée au châssis de l'outil travaillant (9) avec un maillon raccord vissé (5). Ainsi, il faut deux colliers (C₁) et (C₂) par protection de cardan (P).

## Revendications

1. Dispositif pour maintenir fixe les protections de cardan (P) des outils animés par prise de force **caractérisé en ce qu'**il comporte un collier (C) anti-rotation formé par l'assemblage de deux parties en forme de demi-cercle (A) et (B) chacune munie dans la masse à leurs extrémités de pattes d'assemblage (1), les colliers (C₁) et (C₂) venant se serrer sur les tubes de protection de cardan (P₁) et (P₂), les tiges saillantes (6) à l'intérieur des colliers (C₁) et (C₂) venant se loger dans les réservations (7) faites dans l'épaisseur des tubes (P₁) et (P₂) de la protection de cardan (P).

2. Dispositif selon la revendication 1 **caractérisée en ce que** la partie (A) du collier (C) est munie sur sa face externe d'un anneau d'ancrage (3) soudé dans la masse.

3. Dispositif selon la revendication 1 **caractérisée en ce que** les deux parties en forme de demi-cercle (A) et (B) constituant le collier (C) sont assemblés par des pattes de fixation (1) autour de la protection de cardan (P).

4. Dispositif selon la revendication 3 **caractérisée en ce que** les pattes de fixation (1) du collier (C) sont percées et serrées par boulonnage avec des écrous freins indévissables (2).

5. Dispositif selon les revendications 1, 3 et 4 **caractérisées en ce que** lors de l'assemblage des colliers (C₁) et (C₂) les tiges saillantes (6) viennent se loger dans les réservations (7) des tubes (P₁) et (P₂) de la protection de cardan (P).

6. Dispositif selon la revendication 2 **caractérisée en ce que** le collier (C₂) est amarré par une chaînette (4) fixée à l'anneau d'ancrage (3) par un maillon raccord vissable (5) et amarré au châssis du tracteur (8) par un maillon mousqueton (11).

7. Dispositif selon la revendication 2 **caractérisée en ce que** le collier (C₁) est amarré par une chaînette (4) fixée à l'anneau d'ancrage (3) par un maillon raccord vissable (5) cette chaînette étant par l'autre extrémité liée au châssis de l'outil travaillant (9) par un maillon raccord vissable (5).

8. Dispositif selon les revendications 1, 5, 6 et 7 **caractérisées en ce que** chaque protection de cardan est équipée de deux colliers anti-rotation, le collier (C₁) fixé sur la partie de protection de cardan (P₁) côté châssis de l'outil (9) et un collier (C₂) fixé sur la partie de protection de cardan (P₂) côté châssis du tracteur (8).
